# EUROPÄISCHE PATENTSCHRIFT

(11) **EP 2 501 961 B1**
(45) Veröffentlichungstag und Bekanntmachung des Hinweises auf die Patenterteilung: **01.06.2016**
(21) Anmeldenummer: 10779461.2
(22) Anmeldetag: 30.10.2010
(51) Int. Cl.: F16H 49/00, H02K 7/116

(54) **SPANNUNGSWELLENGETRIEBE**
HARMONIC DRIVE TRANSMISSION
RÉDUCTEUR HARMONIQUE

(30) Priorität: 18.11.2009 DE 102009053728
(43) Veröffentlichungstag der Anmeldung: 26.09.2012
(73) Patentinhaber: Audi AG, 85045 Ingolstadt (DE)
(72) Erfinder: SCHMID, Wolfgang, 85354 Freising (DE)
(74) Vertreter: Asch, Konrad
(86) Internationale Anmeldenummer: PCT/EP2010/006641
(87) Internationale Veröffentlichungsnummer: WO 2011/060881

(56) Entgegenhaltungen:
- EP-B1- 1 540 800
- DE-A1-102006 017 713
- DE-C1- 10 137 230
- US-A1- 2003 038 563

## Beschreibung

Die Erfindung betrifft ein Spannungswellengetriebe, mit einer eine Innenverzahnung aufweisenden starren Einheit und einer eine Außenverzahnung aufweisenden flexiblen Einheit, sowie einer ein Wechselmagnetfeld erzeugenden Magnetfelderzeugungseinrichtung, wobei die mit dem Wechselmagnetfeld zusammenwirkende flexible Einheit durch feldbedingt erzeugte magnetische Kräfte eine dynamische Deformation erfährt, über die der Eingriff der Außenverzahnung in die Innenverzahnung verändert wird, so dass sich eine Relativbewegung zwischen der starren Einheit und der flexiblen Einheit ergibt, wobei die Magnetfelderzeugungseinheit im Inneren der zylinderförmigen flexiblen Einheit angeordnet ist, die im Betrieb drehfest ist, während die starre Einheit um die dynamisch deformierte flexible Einheit dreht.

Derartige Spannungswellengetriebe, häufig auch "Hamonic-Drive-Getriebe" genannt, kommen vornehmlich dort zum Einsatz, wo hohe Drehmomente bei geringer Drehgeschwindigkeit übertragen werden sollen. Ein Beispiel ist der Kraftfahrzeugbereich, dort beispielsweise bei einem aktiven Fahrwerk, bei dem es über derartige Spannungswellengetriebe möglich ist, aktive Stellbewegungen vorzunehmen.

Ein Spannungswellengetriebe besteht üblicherweise aus einer starren Einheit, der sogenannten Circular-Spline, die eine Innenverzahnung aufweist. In dieser starren Einheit ist üblicherweise eine flexible Einheit, die sogenannte Flex-Spline, angeordnet, die eine Außenverzahnung aufweist, die mit der Innenverzahnung der starren Einheit lokal in Eingriff steht. Der Durchmesser der Außenverzahnung ist etwas kleiner als die Innenverzahnung, auch besitzt die Innenverzahnung weniger Zähne als die Außenverzahnung. Vorgesehen ist ferner eine üblicherweise ovale Scheibe oder ähnliches, die als Wave-Generator fungiert und in der flexiblen Einheit, also der Flex-Spline, angeordnet ist. Diese Scheibe ist mit einem externen Motor, gegebenenfalls über ein zwischengeschaltetes Getriebe, gekoppelt. Eine motorbedingte Drehung der Scheibe führt zu einer Deformation der Flex-Spline, die eine der Scheibenform entsprechende Form einnimmt. Hierüber wird der Eingriff der beiden Verzahnungen geändert, so dass es im Endeffekt zu einer übersetzten Rotationsbewegung der flexiblen Einheit, also der Flex-Spline, relativ zur starren, nicht bewegten Einheit, der Circular-Spline, kommt. Der Abtrieb erfolgt über die sich übersetzt drehende Flex-Spline.

Da der Einsatz des Wave-Generators, also der elliptischen Scheibe, in Verbindung mit dem vorgeschalteten Getriebe und dem Elektromotor als aufwendig erachtet wurde, wurde in DE 101 37 230 C1 ein Spanungswellengetriebe der eingangs genannten Art vorgeschlagen, bei dem die Deformation der Flex-Spline, also der flexiblen Einheit, über die Wechselwirkung magnetischer Elemente mit einem Magnetfeld erzeugt wird. Hierzu ist eine Magnetfelderzeugungseinrichtung umfassend mehrere separat ansteuerbare Spulenkörper nebst Wicklungen vorgesehen, die symmetrisch an der starren Einheit verteilt angeordnet sind. Jede Spule erzeugt ein eigenes Magnetfeld. Die jeweiligen Magnetfelder wechselwirken mit entsprechenden Permanentmagnetpaketen, die an der Außenseite der flexiblen Einheit symmetrisch verteilt angeordnet sind. Anstelle permanentmagnetischer Elemente können auch weichmagnetische Elemente an der Flex-Spline vorgesehen sein, auch diese lassen eine feldbedingte Deformation zu. Wird ein Magnetfeld erzeugt, so kommt es infolge der magnetischen Wechselwirkung dazu, dass das oder die der felderzeugenden Spule benachbarten Permanentmagnetpakete der Flex-Spline zur Spule hingezogen werden, so dass es zu einer Deformation der ursprünglich runden, zylindrischen Flex-Spline relativ zur starren, unbewegten und nicht deformierten Circular-Spline kommt. Durch entsprechende Ansteuerung der einzelnen Spulen kann nun ein wanderndes Magnetfeld erzeugt werden, so dass es zu einer quasi kreisförmig umlaufenden Deformation der Flex-Spline kommt, worauf infolge der unterschiedlichen Zähnezahl der jeweiligen Verzahnungen eine relative Bewegung der Flex-Spline zur starr bewegten Circular-Spline einsetzt.

Wenngleich bei dem aus DE 101 37 230 C1 bekannten Spannungswellengetriebe der Wave-Generator und die vorgeschaltete Mechanik nebst Antrieb entfällt, so baut das Spannungswellengetriebe radial gesehen beachtlich auf, nachdem die Magnetelemente an der flexiblen Einheit radial gesehen außen liegen, wie auch die Spule diesbezüglich noch weiter radial außenliegend an der Circular-Spline angeordnet sind.

Aus EP 1 540 800 B1 ist ein Spannungswellengetriebe mit den eingangs genannten Merkmalen bekannt. Auch dort ist eine drehfest angeordnete flexible Einheit vorgesehen, in deren Inneren eine Magnetfelderzeugungseinheit aufgenommen ist, die ein die flexible Einheit deformierendes rotierendes Magnetfeld erzeugt. Die starre Einheit dreht, getrieben durch die Deformation der flexiblen Einheit, um diese.

Ein vergleichbar aufgebautes Spannungswellengetriebe, das ebenfalls die eingangs genannten Merkmale aufweist, ist aus US 2003/0038563 bekannt.

Schließlich ist aus DE 10 2006 017 713 A1 ein Spannungswellengetriebe bekannt, das eine flexible Einheit in Form eines Kunststoffrings aufweist, in welchen magnetisch beeinflussbare Bauteile wie z.B. Permanentmagnete eingebettet sind.

Der Erfindung liegt damit das Problem zugrunde, ein Spannungswellengetriebe anzugeben, das im Aufbau kompakter gestaltet ist-dessen Funktion verbessert ist.

Zur Lösung dieses Problems ist bei einem Spannungswellengetriebe der eingangs genannten Art erfindungsgemäß vorgesehen, dass die Magnetfelderzeugungseinheit im Inneren der zylinderförmigen flexiblen Einheit angeordnet ist, die im Betreib drehfest ist, während die starre Einheit um die dynamisch deformierte flexible Einheit dreht. ein die flexible Einheit umgebender ovaler Haltering vorgesehen ist, der bei einer Deformation der flexiblen Einheit um diese gedreht wird.

Um im unbestromten Zustand der Wicklungen den Spulenabstand der Flex-Spline-seitig angeordneten weich- oder permanentmagnetischen Elemente gegenüber wenigstens einem Spulenpaar nicht zu groß werden zu lassen, damit die Außenverzahnung der Flex-Spline stets in Eingriff mit der Innenverzahnung der Circular-Spline bleibt und dieser Eingriff nicht erst bei erneuter Inbetriebnahme des Getriebes herzustellen ist, sieht die Erfindung einen die flexible Einheit umgebenden ovalen Haltering vor, der bei einer Deformation der flexiblen Einheit um diese gedreht wird. Dieser Haltering oder Haltespange liegt im normalen Betrieb nicht fest an der Flex-Spline an, sondern dreht sich mit der Flex-Spline mit, ähnlich wie ein Lagerkäfig eines Kegelrollenlagers. Das heißt, dass der Haltering oder die Haltespange kontinuierlich um die Flex-Spline, resultierend aus deren Deformation, bewegt wird. Wird nun keine der Spulen bestromt, das heißt, wird kein aktive feldbedingte Deformation der Flex-Spline bedingt, so würde die Flex-Spline wieder ihre ursprüngliche Kreisform annehmen wollen. Dies wird jedoch über die ovalen Halteringe verhindert, nachdem sich die flexible Einheit an den Haltering anlegt, der jedoch insoweit starr ist und das weitere Aufformen zur Kreisform verhindert. Das heißt, dass die ovale Flex-Spline-Form beibehalten wird und infolgedessen vorteilhaft verhindert wird, dass der Abstand der Magnetelemente der Flex-Spline zum Stator, also den Spulen, zu groß wird, und dass es zu einem Ausgriff der Verzahnungen kommt.

Während in einer einfachen Ausgestaltung der Erfindung der Haltering allein durch die Deformation der flexiblen Einheit bewegt wird, also quasi "vorwärts geschoben" wird, so besteht alternativ die Möglichkeit, den ovalen Haltering quasi aktiv über das erzeugte Magnetfeld zu bewegen. Hierzu ist der Haltering wenigstens mit einem flussführenden Element aus permanentmagnetischem oder weichmagnetischem Material versehen, das ebenfalls mit dem magnetischen Wechselfeld zusammenwirkt. Dieses flussführende Element steht bevorzugt radial nach innen ab. Alternativ ist es auch denkbar, wenigstens ein Element aus permanentmagnetischem oder weichmagnetischem Material in den Haltering einzubetten. Dies ist besonders dann einfach, wenn der Haltering aus Kunststoff ist. Bevorzugt wird hierbei ein gut gleitender Kunststoff beispielsweise aus PTFE verwendet.

Beim erfindungsgemäßen Spannungswellengetriebe wird die Magnetfelderzeugungseinheit, also die mehreren Spulen nebst Wicklungen, im Inneren der hohlzylindrischen flexiblen Einheit positioniert. Auch befinden sich die metallischen Elemente, die mit den von der Magnetfelderzeugungseinheit erzeugten Feldern wechselwirken, im Inneren der flexiblen Einheit, sie sind also an der Innenseite angeordnet. Das heißt, dass sämtliche der Deformation der flexiblen Einheit und damit der Erzeugung der Rotationsbewegung dienenden Bauelemente im Inneren der flexiblen Einheit, also in einem Raum, der bei einigen Spannungswellengetrieben im Stand der Technik völlig ungenutzt ist, angeordnet sind.

Auch sieht das erfindungsgemäße Spannungswellengetriebe eine Änderung des Abtriebs vor. Denn die Integration der Magnetfelderzeugungseinrichtung nebst der wechselwirkenden Metallelemente in die Flex-Spline lässt es zu, die Flex-Spline als unbewegtes, also nicht gedrehtes Element zu nutzen und den Abtrieb über die Circular-Spline vorzunehmen. Infolge der feldbedingten Deformation und der daraus resultierenden kontinuierlichen Eingriffänderung der Außenverzahnung der Flex-Spline mit der Innenverzahnung der Circular-Spline kommt es zu einer Rotationsbewegung der Circular-Spline um die Flex-Spline. Da die Circular-Spline ohnehin eine in sich starre Einheit ist, kann über sie auf wesentlich einfachere Weise ein Abtrieb, der die Übertragung hoher Drehmomente ermöglicht, zu nachgeschalteten Einheiten erfolgen. Das heißt, dass der Stator mit den Spulen und Wicklungen verdrehsicher mit der Flex-Spline gekoppelt ist, die sich lediglich deformiert, jedoch nicht rotiert. Sie erfährt also nur eine Verbiegung, jedoch keine Rotation, während bei dem erfindungsgemäßen Spannungswellengetriebe die Circular-Spline den Abtrieb bildet. Das erfindungsgemäße Spannungswellengetriebe lässt damit einen wesentlich kompakteren Aufbau zu, der infolge der Funktionsumkehr einen drehmomentstarken Abtrieb über die Circular-Spline zulässt.

Zur Führung des magnetischen Flusses sind an der flexiblen Einheit lokale flussführende Abschnitte entweder aus permanentmagnetischem oder weichmagnetischem Material vorgesehen. Während weichmagnetische Elemente lediglich ein Anziehen an eine benachbarte Spule ermöglichen, besteht bei permanentmagnetischen Elementen die Möglichkeit, bei entsprechender Magnetfeldrichtung eine Abstoßung vorzunehmen. Bei weichmagnetischen Elementen kann eine Ansteuerung beispielsweise derart erfolgen, dass beispielsweise bei Verwendung von acht äquidistant verteilt angeordneten Spulen jeweils zwei einander um 180° gegenüberliegende Spulen angesteuert werden, so dass es an gegenüberliegenden Positionen zu einer Anziehung der weichmagnetischen Elemente, mithin also zur Deformation kommt. Bei Verwendung permanentmagnetischer Elemente ist dies gleichfalls möglich, darüber hinaus können jedoch zusätzlich die beiden um 90° versetzt angeordneten weiteren Spulen ein entgegengerichtetes Magnetfeld erzeugen, so dass die benachbarten permanentmagnetischen Elemente abgestoßen werden und es dort zu einer aktiven, lokal unterstützten weiteren einschnürenden Deformationsbewegung der Flex-Spline kommt. Das Material respektive die Anordnung und geometrische Auslegung der verwendeten weichmagnetischen oder permanentmagnetischen Elemente respektive flussführenden Abschnitte ist so zu wählen, dass es zu einer vernachlässigbaren mechanischen Behinderung im Rahmen der Deformation kommt. Weichmagnetisches Material sollte so gewählt werden, dass es schnell ummagnetisiert werden kann.

Besonders bevorzugt sind die flussführenden Abschnitte derart angeordnet, dass sie an der Flex-Spline radial nach innen abstehen, das heißt, dass sie grundsätzlich ebenfalls im Inneren oder zum Inneren der Flex-Spline gerichtet sind. Nicht ausgeschlossen ist jedoch auch, diese, insbesondere wenn es sich um relativ flache Elemente handelt, auch an der Außenseite der Flex-Spline anzuordnen, wobei dann jedoch gegebenenfalls eine Feldschwächung über das Flex-Spline-Material gegeben ist.

Eine alternative Ausgestaltung hierzu sieht vor, die flussführenden Abschnitte in einen flexiblen Träger einzubetten, der an der flexiblen Einheit angebracht ist oder der selbst die flexible Einheit bildet. Bei dieser Ausgestaltung sind also die flussführenden Abschnitte unmittelbar in einen solchen flexiblen Träger, z. B. aus Kunststoff, eingebettet, entweder vollständig oder flächig beziehungsweise bündig abschließend. An dieser Stelle ist darauf hinzuweisen, dass der Begriff "flussführender Abschnitt" grundsätzlich ein Bauteil beschreibt, das quasi in sich abgeschlossen ist und beispielsweise aus mehreren lamellenartigen Einzelelementen besteht. Mehrere solcher separater flussführender Abschnitte, die von einander unterscheidbar sind und mit entsprechendem Abstand zueinander angeordnet sind, sind Flex-Spline-seitig verteilt vorgesehen.

Eine Alternativausführung zur Verwendung solcher separater flussführender Abschnitte sieht vor, an der flexiblen Einheit einen flexiblen Träger anzubringen oder die flexible Einheit selbst aus einem solchen flexiblen Träger zu bilden, in welchem Trägerelemente aus permanentmagnetischem oder weichmagnetischem Material im Wesentlichen homogen verteilt eingebettet sind, wobei ein solcher Träger bevorzugt aus Kunststoff besteht. Das heißt, dass hier die magnetischen Elemente in fein verteilter Anordnung im flexiblen Träger eingebunden sind, wie dies bei üblichen kunststoffgebundenen magnetischen Bauteilen der Fall ist. Denkbar ist zum Beispiel die Verwendung eines Weich-PVC-Materials, in das die span- oder pulverförmigen Elemente eingebettet sind. Das zu verwendende Kunststoffmaterial ist in Abhängigkeit des Einsatzzwecks wie auch beispielsweise der Einsatztemperatur etc. zu wählen.

Eine dritte erfindungsgemäße Ausgestaltung der flexiblen Einheit sieht vor, diese insgesamt aus einem weichmagnetischen Material auszuführen. Zwar muss die Flex-Spline das Abtriebsmoment abstützen können, gleichwohl ist es ohne weiteres möglich, sie wie beschrieben sowohl aus Kunststoff als auch komplett aus weichmagnetischen Material, also auf einem sehr dünnen Blech, das eine elastische Deformation zulässt, herzustellen. Irgendwelche zusätzlichen magnetischen Elemente sind dann nicht vorzusehen.

Die starre Einheit, die als Abtrieb dient, ist bevorzugt an einem die Magnetfelderzeugungseinrichtung, also die diversen Spulen tragenden Stator drehgelagert. Der Stator selbst befindet sich im Inneren der flexiblen Einheit, ist mit dieser verbunden und durchsetzt diese soweit, dass an einem Lagerabschnitt über ein aufgesetztes Wälzlager die starre Einheit drehgelagert wird.

Alternativ hierzu ist es auch denkbar, ein das Spannungswellengetriebe nach Außen abschließendes Gehäuse vorzusehen, an dem die starre Einheit drehgelagert ist.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Spannungswellengetriebes im Längsschnitt,
- Fig. 2: das Spannungswellengetriebe aus Fig. 1 im Querschnitt, jeweils als Prinzipdarstellung.

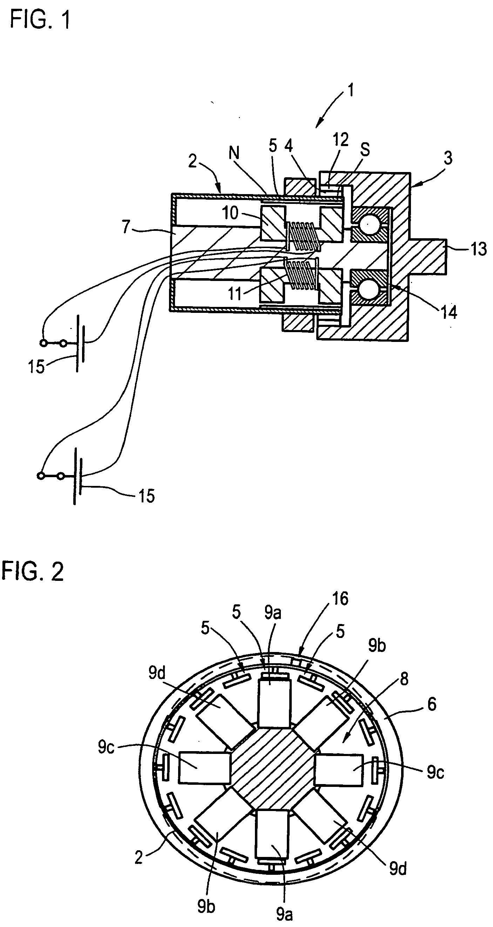

Fig. 1 zeigt ein erfindungsgemäßes Spannungswellengetriebe 1 in Form einer Prinzipdarstellung. Es umfasst eine flexible Einheit 2 sowie eine starre Einheit 3. Die flexible Einheit, im Allgemeinen und nachfolgend als Flex-Spline 2 bezeichnet, ist im wesentlich hohlzylindrisch ausgeführt und besteht beispielsweise aus einem Kunststoffmaterial, bevorzug aber aus Metall. Sie weist an ihrem einen Ende eine Außenverzahnung 4 auf. In diesem Bereich sind, radial äquidistant verteilt, eine Vielzahl flussführender Abschnitte 5 vorgesehen, die an der Innenseite der Flex-Spline 2 angeordnet sind. Im gezeigten Beispiel sei angenommen, dass es sich hierbei um permanentmagnetische Elemente handelt, die jeweils einen Nordpol N und einen Südpol S aufweisen. Die flussführenden Abschnitte 5 können in beliebiger Weise an der Innenseite der Flex-Spline 2 angeordnet sein, beispielsweise angeklebt oder auf entsprechend nach innen ragenden Haltern etc. Sie können auch in das Material der Flex-Spline eingebettet, also beispielsweise eingespritzt sein, so dass sie zur Innenseite hin freiliegen u. ä. An Stelle permanenmagnetischer Elemente ist es auch denkbar weichmagnetische flussführende Abschnitte 5 zu integrieren. Grundsätzlich ist es auch denkbar, anstelle dezidierter flussführender Abschnitte 5 in diesem Bereich eine Vielzahl feiner permanent- oder weichmagnetischer Partikel einzubringen, also in die Kunststoffmatrix einzubetten, wie dies bei kunststoffgebundenen Magnetbauteilen der Fall ist.

Wie insbesondere Fig. 2 zeigt, umgibt die Flex-Spline 2 ein ovaler Haltering 6, der beispielsweise ebenfalls aus Kunststoffmaterial ist (eine Metallausführung ist gleichermaßen möglich) und ein hinreichend starres Bauteil ist, das seine ovale Form nicht ändert. Das heißt, dass über diesen Haltering 6 die Flex-Spline 2 im Bereich der flussführenden Abschnitte 5 stets in eine ovale Form gezwängt wird, auch wenn dies aufgrund nicht anliegender Magnetfelder, worauf nachfolgend noch eingegangen wird, nicht der Fall wäre.

Im Inneren der Flex-Spline 2 ist ein mit ihr verdrehsicher verbundener Stator 7 angeordnet, an dem äquidistant verteilt eine Magnetfelderzeugungseinrichtung 8 umfassend im gezeigten Beispiel insgesamt acht äquidistant beabstandete Spulen 9, jeweils bestehend aus einem Metall-, insbesondere Eisenjoch 10 und einer Wicklung 11, angeordnet sind. Jeweils zwei einander gegenüberliegende Spulen 9 bilden ein Paar, in Fig. 2 sind die jeweiligen Paare mit 9a, 9b, 9c und 9d bezeichnet, gleichwohl ist eine paarweise Anordnung nicht zwingend. Wenngleich hier vier Spulenpaare vorgesehen sind, lässt sich der erfindungsgemäße Betrieb auch mit beispielsweise nur drei Spulenpaaren erreichen. Mehr als drei Spulenpaare sind jedoch dahingehend von Vorteil, als sich die Winkelauflösung verbessern lässt. Wie insbesondere Fig. 2 zeigt, sind deutlich mehr flussführende Abschnitte 5 als einzelne Spulen 9 vorgesehen. Auch die hinreichend hohe Anzahl an flussführenden Abschnitten ist für eine gute Winkelauflösung zweckmäßig.

Die starre Einheit, nachfolgend als Circular-Spline 3 bezeichnet, ist topfartig ausgeführt und weist an einem Ende eine Innenverzahnung 12 auf, die mit der Außenverzahnung der Flex-Spline 2 kämmt. Festzuhalten ist, dass die Zahnzahl der Außenverzahnung kleiner ist als die Zahnzahl der Innenverzahnung, wie auch der Durchmesser der Flex-Spline etwas kleiner ist als der Durchmesser der Circular-Spline. Dies ist erforderlich, um zum einen deformationsbedingt einen Zahneingriff zu ermöglichen, und zum anderen infolge der differierenden Zahnanzahl eine Rotationsbewegung zu erzielen.

Die Circular-Spline 3, die als Abtrieb dient, und hierzu einen entsprechenden Abtriebszapfen 13 oder dergleichen aufweist, ist über ein Wälzlager 14, beispielsweise ein Kugellager, auf dem Stator 7 drehgelagert. Um diese Drehlagerung rotiert die Circular-Spline 3 relativ zur feststehenden Flex-Spline 2, wenn durch entsprechende getaktete Bestromung der einzelnen Spulenpaare 9a - 9d ein umlaufendes magnetisches Wechselfeld erzeugt wird.

Im Betrieb werden nun die jeweiligen Spulenpaare 9a - 9d über jeweilige separate Ansteuereinrichtungen 15 bestromt, es kommt zum Aufbau eines Magnetfelds, mit dem die flussführenden Abschnitte 5 wechselwirken. Die Ansteuereinrichtungen 15 können bei Bedarf die Stromrichtung umkehren, so dass sich auch entgegengesetzt gerichtete Magnetfelder erzeugen lassen. Dies führt dazu, dass wechselweise je nach Bedarf eine anziehende Kraft erzeugt werden kann, die dazu führt, dass die benachbart zu einem bestromten Spulenpaar liegenden flussführenden Abschnitte, hier also die Permanentmagneten, in Richtung der jeweiligen Spule angezogen werden, respektive, im umgekehrten Fall, dass sie abgestoßen werden.

Diese Möglichkeit, insbesondere die Anziehung (die bei weichmagnetischen flussführenden Abschnitten alleine möglich ist) führt dazu, dass grundsätzlich eine elliptische, ovale Verformung der Flex-Spline 2 im Bereich der flussführenden Abschnitte 5 und damit auch im Bereich der Außenverzahnung 4 möglich ist. Durch die Bestromung der jeweiligen Wicklungen 11 der einzelnen Spulen 9 und Beendigung der Bestromung der in Drehrichtung gesehen vor den nun bestromten Spulen liegenden Spulen kommt es zwangsläufig zu einer Veränderung der Deformation und mithin zu einer Änderung des Verzahnungseingriffs infolge der Wanderung des Magnetfelds. Infolge der Veränderung der ovalen, ellipsenförmigen Deformation der Flex-Spline 2 kommt es zu einer Drehung der großen Ellipsenachse, im gezeigten Beispiel mit vier Spulenpaaren um 45°. Da die Innenverzahnung 12 der Circular-Spline 3 einige Zähne, beispielsweise zwei oder drei, mehr aufweist als die Außenverzahnung 4 der Flex-Spline 2 kommt es zu einer Drehung der Circular-Spline 3 relativ zur Flex-Spline 2 um einen gewissen Anteil einer Zahnbreite. Durch ein zeitlich aufeinanderfolgendes Bestromen unterschiedlicher Spulenpaare, also der Erzeugung eines rotierenden Magnetfelds, kommt es folglich zu einer dynamischen ellipsenförmigen Deformation der Flex-Spline 2. Durch diese dynamische Deformation kommt es wiederum zu einer Rotation der großen Ellipsenachse um die Drehachse, definiert durch den Stator 7, woraus sich eine kontinuierliche Drehung der Circular-Spline 3 ergibt.

Werden als flussführende Abschnitte Permanentmagneten eingesetzt, so besteht die Möglichkeit, zeitgleich beispielsweise jeweils zwei um 90° versetzte Spulenpaare anzusteuern, ausgehend vom Beispiel gemäß Fig. 2 die Spulenpaare 9a und 9c. Das Spulenpaar 9a wird so angesteuert, dass die gegenüberliegenden permanentmagnetischen Abschnitte 5 angezogen werden, während das Spulenpaar 9c so angesteuert wird, dass die gegenüberliegenden permanentmagnetischen Abschnitte 5 abgestoßen werden. Hierüber kann die Ellipsenausbildung und die Deformation verbessert respektive unterstützt werden, da sowohl im Bereich der langen als auch im Bereich der kurzen Ellipsenachse aktiv deformiert wird.

Der ovale Haltering 6 wird während der kontinuierlichen umlaufenden Deformation gedreht, er wandert mit der rotierenden großen Ellipsenachse um die feststehende Flex-Spline 2. Das heißt, das die gegebene ovale Deformation der Flex-Spline 2 stets die Lage des Halterings 6 bestimmt. Wird nun, wenn das Getriebe nicht benötigt wird, die Bestromung der Spulen 9 beendet, so würde die Flex-Spline 2, die insoweit elastisch ist, in die runde Grundform zurückkehren wollen, dies wird jedoch durch den ovalen, insoweit starren Haltering 6 verhindert. Das heißt, ausgehend vom Beispiel gemäß Fig. 2 und einer angenommenen Beendigung der Bestromung, dass die Flex-Spline 2 in der dort gezeigten Position verbleibt, in der die dem Spulenpaar 9a gegenüberliegenden flussführenden Abschnitte 5 nahe den jeweiligen Spulen sind, so dass der Luftspalt zwischen Spule 9a und flussführenden Abschnitt 5 sehr klein bleibt. Soll nun das Getriebe wieder in Betrieb genommen werden, so kann bei Bestromung des Spulenpaars 9a sofort wieder die Anziehungskraft über das Magnetfeld aufgebaut werden und sofort wieder bei Änderung der Bestromung die Rotationsbewegung erwirkt werden.

Der Haltering 6 ist bevorzugt aus einem Material, das möglichst reibungsarm auf dem Material der Flex-Spline 2 gleitet, beispielsweise aus PTFE oder einem ähnlichen Gleitkunststoff. Der minimale Durchmesser des ovalen Halterings 6 sollte so gewählt sein, dass die benachbarten flussführenden Abschnitte 5 über einen schmalen Luftspalt von der jeweiligen benachbarten Spule 9 beabstandet sind. Wenngleich sich die flussführenden Abschnitte 5 im Betrieb durchaus direkt an die Spulen anlegen können, was hier möglich ist, da es zu keinerlei Rotationsbewegung zwischen der Flex-Spline 2 beziehungsweise den flussführenden Abschnitten 5 und dem Stator 7 respektive den Spulen 9 kommt, ist es für die Funktion des Halterings 6 ausreichend, wenn ein schmaler Luftspalt verbleibt.

Wie Fig. 2 zeigt, kann am Haltering 6 ein beispielsweise permanentmagnetisches Element 16 angeordnet sein, das ebenfalls mit dem in seiner Umgebung erzeugten Magnetfeld wechselwirkt. Durch diese Wechselwirkung kann erreicht werden, dass der Haltering 6 auch aktiv über diese Wechselwirkung in die Richtung der umlaufenden langen Ellipsenachse bewegt wird, so dass die Ringbewegung also nicht nur deformationsbedingt erfolgt, sondern auch aktiv feldunterstützt sein kann. Dieses permanent- oder weichmagnetische Element 16 ist bevorzugt in den Haltering 6 eingebettet.

Wenngleich im gezeigten Ausführungsbeispiel separate flussführende Abschnitte 5 vorgesehen sind, die an einer beispielsweise aus Kunststoff oder Metall gebildeten Flex-Spline ausgebildet sind, wäre es auch denkbar, die Flex-Spline 2 insgesamt aus weichmagnetischem Material, beispielsweise aus einem dünnen Metallblech, zu bilden, das eine elastische Verformung im Verzahnungsbereich ermöglicht. Die Funktionsweise wäre dann ähnlich wie beim Ausführungsbeispiel nach den Figuren 1 und 2 beschrieben, jedoch ließe sich - wie auch bei Verwendung flussführender Abschnitte aus reinem weichmagnetischem Material - nur eine Anziehung zwischen der Flex-Spline 2 und den Spulenpaaren 9a - 9d erreichen, jedoch keine Abstoßung. Das jeweils verwendete weichmagnetische Material sollte sehr schnell ummagnetisierbar sein. Schließlich besteht die Möglichkeit, an Stelle einer Drehlagerung der Circular-Spline 3 am Stator 7 (die eine sehr kompakte Bauweise ermöglicht) auch ein hier nicht näher gezeigtes Gehäuse vorzusehen, das die Flex-Spline 2 umgibt und das wie die Flex-Spline 2 lagefest ist. An der Gehäuseinnenseite wäre dann die Circular-Spline 3 über eine geeignete Drehlagerung wie ein Wälzlager und ähnliches drehgelagert.

Schließlich ist festzuhalten, dass die gezeigten flussführenden Abschnitte 5, wenngleich hier in den jeweiligen Prinzipskizzen als Einzelbauteile dargestellt, auch aus schmalen einzelnen Lamellen gebildet sein können, die parallel zueinander angeordnet sein können, so dass es zu keiner Behinderung der Deformation kommt. Hinsichtlich der konkreten Ausgestaltung der flussführenden Abschnitte 5, der verwendeten Materialien oder der Verwendung eingebetteter Elemente und ähnliches sind also keine Beschränkungen gegeben, solange sich eine gute magnetische Wechselwirkung zum Magnetfeld respektive den Spulen 9 ergibt und eine gute flexible Deformation der Flex-Spline 2 in diesem Bereich möglich ist. Denkbar wäre beispielsweise auch, auf die Innenseite der Flex-Spline 2 einen Träger, beispielsweise aus Kunststoff, in dem fein verteilt weich- oder permanentmagnetische Partikel enthalten sind, aufzukleben oder dergleichen. Das heißt, dass dort also ein Kunststoffband aufgebracht wird, in das die permanent- oder weichmagnetischen Elemente eingebettet sind, die dann mit dem über die Spulen 9 erzeugten Magnetfeld wechselwirken.

## Patentansprüche

1. Spannungswellengetriebe, mit einer eine Innenverzahnung (12) aufweisenden starren Einheit (3) und einer eine Außenverzahnung (4) aufweisenden Zylinderförmigen flexiblen Einheit (2), sowie einer ein Wechselmagnetfeld erzeugenden Magnetfelderzeugungseinrichtung (8), wobei die mit dem Wechselmagnetfeld zusammenwirkende flexible Einheit (2) durch feldbedingt erzeugte magnetische Kräfte eine dynamische Deformation erfährt, über die der Eingriff der Außenverzahnung (4) in die Innenverzahnung (12) verändert wird, so dass sich eine Relativbewegung zwischen der starren Einheit (3) und der flexiblen Einheit (2) ergibt,
wobei die Magnetfelderzeugungseinheit (8) im Inneren der zylinderförmigen flexiblen Einheit (2) angeordnet ist, die im Betrieb drehfest ist, während die starre Einheit (3) um die dynamisch deformierte flexible Einheit (2) dreht
**dadurch gekennzeichnet,**
**dass** ein die flexible Einheit (2) umgebender ovaler Haltering (6) vorgesehen ist, der bei einer Deformation der flexiblen Einheit (2) um diese gedreht wird.

2. Spannungswellengetriebe nach Anspruch 1,
**dadurch gekennzeichnet,**
**dass** der Haltering (6) durch die Deformation der flexiblen Einheit (2) bewegt wird.

3. Spannungswellengetriebe nach Anspruch 1 oder 2,
**dadurch gekennzeichnet,**
**dass** der Haltering (6) wenigstens ein flussführendes Element (16) aus permanentmagnetischem oder weichmagnetischem Material aufweist, das mit dem Wechselfeld zusammenwirkt.

4. Spannungswellengetriebe nach Anspruch 3,
**dadurch gekennzeichnet,**
**dass** das Element (16) aus permanentmagnetischem oder weichmagnetischem Material in den Haltering (6) eingebettet ist.

5. Spannungswellengetriebe nach einem der vorangehenden Ansprüche,
**dadurch gekennzeichnet,**
**dass** der Haltering (6) aus Kunststoff oder Metall ist.

6. Spannungswellengetriebe nach einem der vorangehenden Ansprüche,
**dadurch gekennzeichnet,**
**dass** an der flexiblen Einheit (2) lokale flussführende Abschnitte (5) aus permanentmagnetischem oder weichmagnetischem Material vorgesehen sind.

7. Spannungswellengetriebe nach Anspruch 6,
**dadurch gekennzeichnet,**
**dass** ein lokal flussführender Abschnitt (5) radial nach innen abstehend angebracht ist.

8. Spannungswellengetriebe nach Anspruch 6,
**dadurch gekennzeichnet.**
**dass** ein lokal flussführender Abschnitt (5) in einen flexiblen Träger, der an der flexiblen Einheit angebracht ist oder der die flexible Einheit (2) bildet, eingebettet sind.

9. Spannungswellengetriebe nach Anspruch 1 bis 5,
**dadurch gekennzeichnet,**
**dass** an der flexiblen Einheit (2) ein flexibler Träger angebracht ist oder ein flexibler Träger die flexible Einheit bildet, in welchen Träger Elemente aus permanentmagnetischem oder weichmagnetischem Material im wesentlichen homogen verteilt eingebettet sind.

10. Spannungswellengetriebe nach Anspruch 9,
**dadurch gekennzeichnet,**
**dass** der Träger aus Kunststoff besteht.

11. Spannungswellengetriebe nach Anspruch 1 bis 5,
**dadurch gekennzeichnet,**
**dass** die flexible Einheit (2) aus einem weichmagnetischen Material besteht.

12. Spannungswellengetriebe nach einem der vorangehenden Ansprüche,
**dadurch gekennzeichnet,**
**dass** die starre Einheit (3) an einem die Magnetfelderzeugungseinrichtung (8) tragenden Stator (7) drehgelagert ist.

13. Spannungswellengetriebe nach einem Ansprüche 1 bis 11,
**dadurch gekennzeichnet,**
**dass** ein Gehäuse vorgesehen ist, wobei die starre Einheit (3) am Gehäuse drehgelagert ist.

## Claims

1. Strain wave gearing with a rigid unit (3) having inner teeth (12) and a cylindrical, flexible unit (2) comprising outer teeth (4), as well as a magnetic field generating device (8) which produces an alternating magnetic field, wherein through magnetic forces produced as a result of the field the flexible unit (2) interacting with the alternating magnetic field is subject to dynamic deformation through which the engagement of the outer teeth (4) in the inner teeth (12) is changed so that a relative movement between the rigid unit (2) and the flexible unit (2) is produced,
wherein the magnetic field generating unit (8) is arranged in the interior of the cylindrical, flexible unit (2) which during operation is resistant to rotation, whereas the rigid unit (3) turns about the dynamically deformed flexible unit (2)
**characterised in that** an oval holding ring (6) is provided which surrounds the flexible unit (2) and which during a deformation of the flexible unit (2) is rotated around the latter.

2. Strain wave gearing according to claim 1
**characterised in that**
the holding ring (6) is moved through the deformation of the flexible unit (2).

3. Strain wave gearing according to claim 1 or 2
**characterised in that**
the holding ring (6) comprises at least one current conducting element (16) made of a permanent magnetic or soft magnetic material which interacts with the alternating field.

4. Strain wave gearing according to claim 3
**characterised in that**
the element (16) made of permanent magnetic or soft magnetic material is embedded in the holding ring (6)

5. Strain wave gearing according to any one of the preceding claims
**characterised in that**
the holding ring (6) is made of plastic or metal.

6. Strain wave gearing according to any one of the preceding claims
**characterised in that**
on the flexible unit (2) local current conducting sections (5) of permanent magnetic or soft magnetic material are provided.

7. Strain wave gearing according to claim 6
**characterised in that**
a local current conducting section (5) is applied projecting inwardly.

8. Strain wave gearing according to claim 6
**characterised in that**
a local current conducting section (5) in embedded in a flexible carrier which is applied to the flexible unit or forms the flexible unit (2).

9. Strain wave gearing according to claims 1 to 5
**characterised in that** a flexible carrier is applied to the flexible unit (2) or a flexible carrier forms the flexible unit, in said carrier elements of permanent magnetic or soft magnetic material being embedded in a essentially homogeneously distributed manner.

10. Strain wave gearing according to claim 9
**characterised in that** the carrier is made of plastic.

11. Strain wave gearing according to claim 1 to 5
**characterised in that**
the flexible unit (2) is made of a soft magnetic material.

12. Strain wave gearing according to any one of the preceding claims
**characterised in that**
the rigid unit (3) is rotatably mounted on a stator (7) bearing the magnetic field generating device (8).

13. Strain wave gearing according to any one of claims 1 to 11
**characterised in that**
a housing is provided, wherein the rigid unit (3) is rotatably mounted on the housing.

## Revendications

1. Transmission harmonique, avec une unité rigide (3) comportant un engrenage intérieur (12) et avec une unité flexible (2) cylindrique comportant un engrenage extérieur (4) ainsi qu'avec un dispositif producteur de champ magnétique (8) produisant un champ magnétique alternatif, l'unité flexible (2) qui coopère avec le champ magnétique alternatif subissant, via des forces magnétiques produites à cause du champ, une déformation dynamique par l'intermédiaire de laquelle l'engrènement de l'engrenage extérieur (4) dans l'engrenage intérieur (12) est modifié de telle sorte qu'il en résulte un mouvement relatif entre l'unité rigide (3) et l'unité flexible (2),
le dispositif producteur de champ magnétique (8) étant agencé à l'intérieur de l'unité flexible (2) cylindrique qui est fixe en rotation lors du fonctionnement tandis que l'unité rigide (3) tourne autour de l'unité flexible (2) déformée dynamiquement,
**caractérisée en ce qu'**il est prévu une bague de support (6) ovale qui entoure l'unité flexible (2) et qui, lors d'une déformation de l'unité flexible (2), tourne autour de celle-ci.

2. Transmission harmonique selon la revendication 1, **caractérisée en ce que** la bague de support (6) est déplacée par la déformation de l'unité flexible (2).

3. Transmission harmonique selon la revendication 1 ou 2, **caractérisée en ce que** la bague de support (6) comporte au moins un élément (16) conducteur de flux, en un matériau à aimantation permanente ou en un matériau magnétique doux, qui coopère avec le champ alternatif.

4. Transmission harmonique selon la revendication 3, **caractérisée en ce que** l'élément (16) en un matériau à aimantation permanente ou en un matériau magnétique doux est intégré dans la bague de support (6).

5. Transmission harmonique selon l'une des revendications précédentes, **caractérisée en ce que** la bague de support (6) est en plastique ou en métal.

6. Transmission harmonique selon l'une des revendications précédentes, **caractérisée en ce que** des tronçons (5) conducteurs locaux de flux, en un matériau à aimantation permanente ou en un matériau magnétique doux, sont prévus sur l'unité flexible (2).

7. Transmission harmonique selon la revendication 6, **caractérisée en ce qu'**un tronçon (5) conducteur local de flux est agencé à une certaine distance radiale vers l'intérieur.

8. Transmission harmonique selon la revendication 6, **caractérisée en ce qu'**un tronçon (5) conducteur local de flux est intégré dans un support flexible qui est agencé sur l'unité flexible ou qui forme l'unité flexible (2).

9. Transmission harmonique selon la revendication 1 à 5, **caractérisée en ce qu'**un support flexible est agencé sur l'unité flexible (2) ou un support flexible forme l'unité flexible, support dans lequel des éléments en un matériau à aimantation permanente ou en un matériau magnétique doux sont intégrés suivant une répartition globalement homogène.

10. Transmission harmonique selon la revendication 9, **caractérisée en ce que** le support est en plastique.

11. Transmission harmonique selon la revendication 1 à 5, **caractérisée en ce que** l'unité flexible (2) est en un matériau magnétique doux.

12. Transmission harmonique selon l'une des revendications précédentes, **caractérisée en ce que** l'unité rigide (3) est logée de manière à pouvoir tourner sur un stator (7) portant le dispositif producteur de champ magnétique (8),

13. Transmission harmonique selon l'une des revendications 1 à 11, **caractérisée en ce qu'**un carter est prévu, l'unité rigide (3) étant logée de manière à pouvoir tourner sur le carter.
